# EUROPEAN PATENT APPLICATION

(11) **EP 2 506 200 A1**
(43) Date of publication of application: **03.10.2012**
(21) Application number: 12001519.3
(22) Date of filing: 06.03.2012
(51) Int. Cl.: G06Q 10/06

(54) **Information processing apparatus, information processing method, program, and information processing system**

(30) Priority: 31.03.2011 JP 2011078074
(71) Applicant: Sony Corporation, Tokyo 108-0075 (JP)
(72) Inventor: Kamada, Yasunori, Tokyo 108-0075 (JP); Kawashima, Hiroshi, Tokyo 108-0075 (JP); Noma, Hideki, Tokyo 108-0075 (JP)
(74) Representative: Müller - Hoffmann & Partner

(57) **Abstract**

An information processing apparatus includes an acquisition unit that acquires personal identification information for identifying a person, a control unit that generates correlation information by correlating the personal identification information acquired by the acquisition unit with an environmental impact which is an impact exerted on the environment by the person, and a storage unit that stores the correlation information generated by the control unit.

## Description

### BACKGROUND

The present disclosure relates to an information processing apparatus, an information processing method, a program, and an information processing system.

In recent years, awareness of ecology has been increased, and thus actions for reducing an impact on the global environment (also simply referred to as an "environmental impact") have been spread worldwide. For example, there are techniques or the like, through which a user judges whether or not to use home appliances wastefully, by indicating a power amount consumed by the home appliances to the user. As techniques of measuring a power consumption amount, for example, there is a technique where a power consumption amount measurement device is connected to a power distribution board of the house, and thereby a power amount consumed by the entire house is measured.

In addition, for example, there is a technique where the power consumption amount measurement device is connected to a power supply portion of the home appliance, and thereby a power amount consumed by the home appliance is measured (for example, refer to Japanese Unexamined Patent Application Publication No. 2002-311070). According to the techniques, in a case where a power amount consumed by an appliance which is determined to be used by a specific user is measured, it is possible to specify the user who performs operations generating power corresponding to the measured power amount.

### SUMMARY

However, in a case where a power amount consumed by an appliance which is not determined to be used by a specific user is measured, to specify the user who performs operations generating power corresponding to the measured power amount is not disclosed. Under the circumstances where personal action for reducing the environmental impact is being spread, it is necessary to grasp the environmental impact for each person.

According to an embodiment of the present disclosure, there is provided an information processing apparatus including an acquisition unit that acquires personal identification information for identifying a person; a control unit that generates correlation information by correlating the personal identification information acquired by the acquisition unit with an environmental impact which is an impact exerted on the environment by the person; and a storage unit that stores the correlation information generated by the control unit.

According to another embodiment of the present disclosure, there is provided an information processing system having an information processing apparatus; and a server, wherein the image processing apparatus includes an acquisition unit that acquires personal identification information for identifying a person; a control unit that generates correlation information by correlating the personal identification information acquired by the acquisition unit with an environmental impact which is an impact exerted on the environment by the person; a storage unit that stores the correlation information generated by the control unit; and a transmission unit that transmits the correlation information stored in a storage unit, and wherein the server includes a reception unit that receives the correlation information from the information processing apparatus; and a storage unit that stores the correlation information received by the reception unit.

According to still another embodiment of the present disclosure, there is provided an information processing system having a data accumulation apparatus; and a server, wherein the data accumulation apparatus includes a storage unit that stores personal identification information for identifying a person and history information regarding actions of the person; and a transmission unit that transmits the personal identification information and the history information stored in the storage unit, and wherein the server includes an acquisition unit that acquires the personal identification information and the history information from the data accumulation apparatus; a control unit that generates correlation information by correlating the personal identification information acquired by the acquisition unit with an environmental impact obtained by analyzing the history information acquired by the acquisition unit; and a storage unit that stores the correlation information generated by the control unit.

According to the embodiments of the present disclosure, it is possible to grasp an environmental impact for each person.

Various respective aspects and features of the invention are defined in the appended claims.

### BRIEF DESCRIPTION OF THE DRAWINGS

Fig. 1 is a diagram illustrating a configuration of an information processing system according to a first embodiment of the present disclosure.
Fig. 2 is a block diagram illustrating functional configurations of a home appliance and a server according to the same embodiment.
Fig. 3 is a diagram illustrating an acquisition example of personal identification information by the home appliance according to the same embodiment.
Fig. 4 is a block diagram partially illustrating details of functional configurations in a case where the personal identification information is acquired according to the acquisition example shown in Fig. 3.
Fig. 5 is a diagram illustrating an acquisition example of power consumption amount by the home appliance according to the same embodiment.
Fig. 6 is a block diagram partially illustrating details of functional configurations in a case where the personal identification information is acquired according to the acquisition example shown in Fig. 5.
Fig. 7 is a diagram illustrating an acquisition example of personal identification information by the home appliance according to the same embodiment.
Fig. 8 is a block diagram partially illustrating details of functional configurations in a case where the personal identification information is acquired according to the acquisition example shown in Fig. 7.
Fig. 9 is a diagram illustrating a configuration example of information managed by the server according to the same embodiment.
Fig. 10 is a flowchart illustrating an operation of the home appliance according to the same embodiment.
Fig. 11 is a flowchart illustrating an operation of the server according to the same embodiment.
Fig. 12 is a diagram illustrating a configuration of an information processing system according to a second embodiment of the present disclosure.
Fig. 13 is a block diagram illustrating functional configurations of a data accumulation apparatus and a server according to the same embodiment.
Fig. 14 is a diagram illustrating a detailed example of the process performed by the information processing system according to the same embodiment.
Fig. 15 is a diagram illustrating a configuration example of the information managed by the server according to the same embodiment.
Fig. 16 is a flowchart illustrating an operation of the data accumulation apparatus according to the same embodiment.
Fig. 17 is a flowchart illustrating an operation of the server according to the same embodiment.
Fig. 18 is a block diagram illustrating a hardware configuration of the information processing apparatus according to each embodiment of the present disclosure.

### DETAILED DESCRIPTION OF EMBODIMENTS

Hereinafter, embodiments of the present disclosure will be described with reference to the accompanying drawings. In addition, in the present specification and the drawings, constituent elements having substantially the same functional configuration are given the same reference numerals, and repeated description will be omitted.

Further, in the present specification and the drawings, in some cases, a plurality of constituent elements having substantially the same functional configuration are differentiated from each other by adding different letters to the same reference numeral. For example, a plurality of constituent elements having substantially the same functional configuration are differentiated from each other such as a washing machine 100A and a rice cooker 100B. However, if a plurality of constituent elements having substantially the same functional configuration are not particularly differentiated from each other, only the same reference numeral is given thereto. For example, if the washing machine 100A and the rice cooker 100B are not particularly differentiated from each other, they are simply referred to as a home appliance 100.

In addition, the description will be made in the following order.
1. CONFIGURATION OF INFORMATION PROCESSING APPARATUS
2. FIRST EMBODIMENT
   2.1. CONFIGURATION OF INFORMATION PROCESSING SYSTEM
   2.2. FUNCTION OF INFORMATION PROCESSING SYSTEM
   2.3. OPERATION OF INFORMATION PROCESSING SYSTEM
3. SECOND EMBODIMENT
   3.1. CONFIGURATION OF INFORMATION PROCESSING SYSTEM
   3.2. FUNCTION OF INFORMATION PROCESSING SYSTEM
   3.3. OPERATION OF INFORMATION PROCESSING SYSTEM
4. HARDWARE CONFIGURATION OF INFORMATION PROCESSING APPARATUS
5. CONCLUSION

### 1. CONFIGURATION OF INFORMATION PROCESSING APPARATUS

The present disclosure may be implemented in various forms as described in "2. FIRST EMBODIMENT" to "3. SECOND EMBODIMENT" in detail. In addition, an information processing apparatus (100, 700) according to each embodiment includes:
A. An acquisition unit (110, 710) which acquires personal identification information for identifying a person;
B. A control unit (120, 720) which generates correlation information by correlating the personal identification information acquired by the acquisition unit with an environmental impact which is an impact exerted on the environment by the person; and
C. A storage unit (130, 730) which stores the correlation information generated by the control unit. According to such an information processing apparatus (100, 700), it is possible to grasp an environmental impact for each person.

### 2. FIRST EMBODIMENT

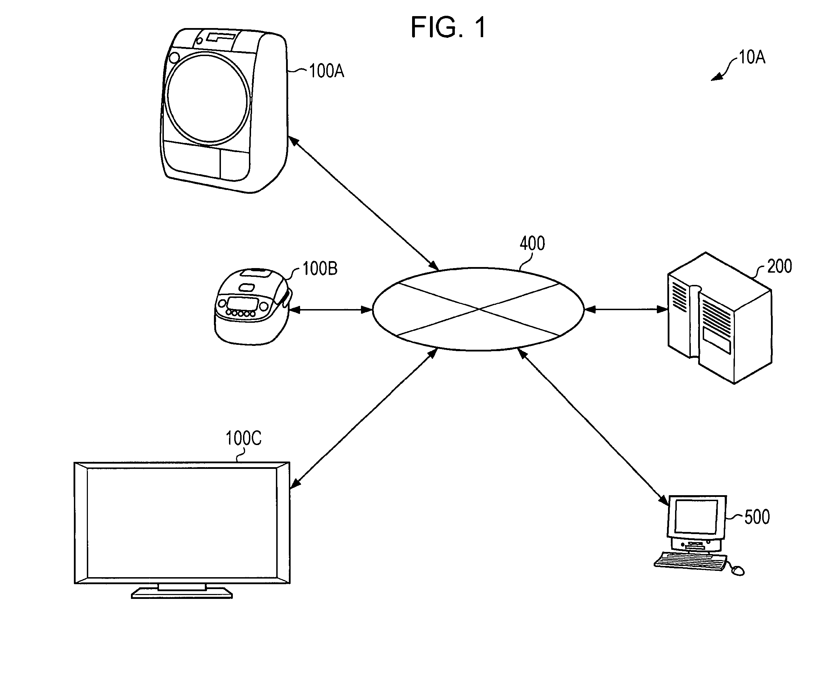

Next, the first embodiment of the present disclosure will be described with reference to Figs. 1 to 11.

### 2.1. CONFIGURATION OF INFORMATION PROCESSING SYSTEM

First, a configuration of the information processing system according to the first embodiment will be described with reference to Fig. 1. As shown in Fig. 1, the information processing system 10A according to the first embodiment of the present disclosure includes home appliances 100A to 100C as examples of the information processing apparatuses, a server 200, and a terminal 500. The home appliances 100A to 100C, the server 200, and the terminal 500 can communicate with each other via a network 400. In addition, the number of each of the home appliance 100, the server 200, and the terminal 500 is not particularly limited.

The home appliance 100 is, for example, an appliance which is used by a user (also referred to as a "person" which is also the same for the following). In Fig. 1, as examples of the home appliances 100, a washing machine 100A, a rice cooker 100B, and a television set 100C are shown, and the kind of home appliance 100 is not limited thereto. Further, in the first embodiment of the present disclosure, the home appliance 100 is used as an example of the information processing apparatus; however, appliances other than the home appliance 100 may be used, and any appliance may be used as long as the appliance consumes power.

The home appliance 100 acquires user identification information for identifying a user, and generates correlation information by correlating the acquired user identification information with an environmental impact which is an impact exerted on the environment by the user. The home appliance 100 stores the generated correlation information. The home appliance 100 can transmit the stored correlation information to the server 200. In the first embodiment of the present disclosure, a power consumption amount which is a power amount consumed by the use of the home appliance 100 is used as the environmental impact.

When the correlation information is transmitted from the home appliance 100, the server 200 receives the correlation information and can store the received correlation information. The terminal 500 receives the correlation information stored in the server 200, and can present the correlation information to a user by displaying the received correlation information.

### 2.2. FUNCTION OF INFORMATION PROCESSING SYSTEM

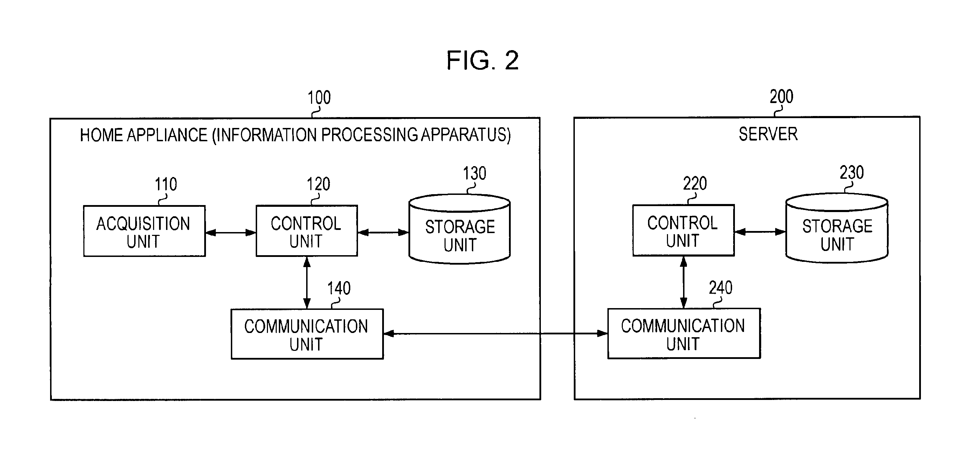

Fig. 2 is a block diagram illustrating functional configurations of the home appliance 100 and the server 200 according to the first embodiment of the present disclosure. As shown in Fig. 2, the home appliance 100 includes an acquisition unit 110, a control unit 120, a storage unit 130, and a communication unit 140. Each block of the home appliance 100 may be embedded in the home appliance 100 or may be installed in the home appliance 100 through externally attachment thereto. In addition, as shown in Fig. 2, the server 200 includes a control unit 220, a storage unit 230, and a communication unit 240.

The acquisition unit 110 acquires user identification information for identifying a user of the home appliance 100. The control unit 120 generates correlation information by correlating the user identification information acquired by the acquisition unit 110 with an environmental impact which is an impact exerted on the environment by the user. In the first embodiment of the present disclosure, the control unit 120 correlates a power consumption amount which is a power amount consumed by the use of the home appliance 100 as the environmental impact with the user identification information. If the user identification information is not acquired by the acquisition unit 110, the control unit 120 may generate correlation information by correlating, for example, user identification information "unidentified" with the environmental impact. In addition, the control unit 120 includes, for example, a CPU, a ROM, and a RAM.

The storage unit 130 stores a variety of information used by the control unit 120. The storage unit 130 stores, for example, the correlation information generated by the control unit 120. The storage unit 130 is constituted by, for example, a storage device. The communication unit 140 communicates with the server 200 based on a control performed by the control unit 120. The communication unit 140 is constituted by, for example, a communication device, and may function as a transmission unit transmitting the correlation information stored in the storage unit 130 to the server 200 and a reception unit.

The communication unit 240 communicates with the home appliance 100 based on a control performed by the control unit 220. The communication unit 240 is constituted by, for example, a communication device, and may function as a reception unit receiving the correlation information from the home appliance 100 and a transmission unit. The storage unit 230 stores a variety of information used by the control unit 220. The storage unit 230 stores, for example, the correlation information received by the communication unit 240. The storage unit 230 is constituted by, for example, a storage device.

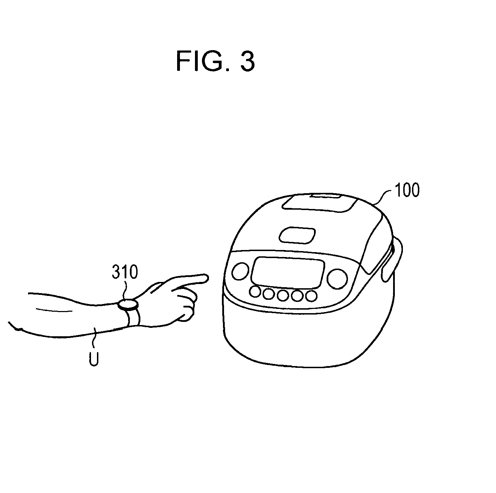

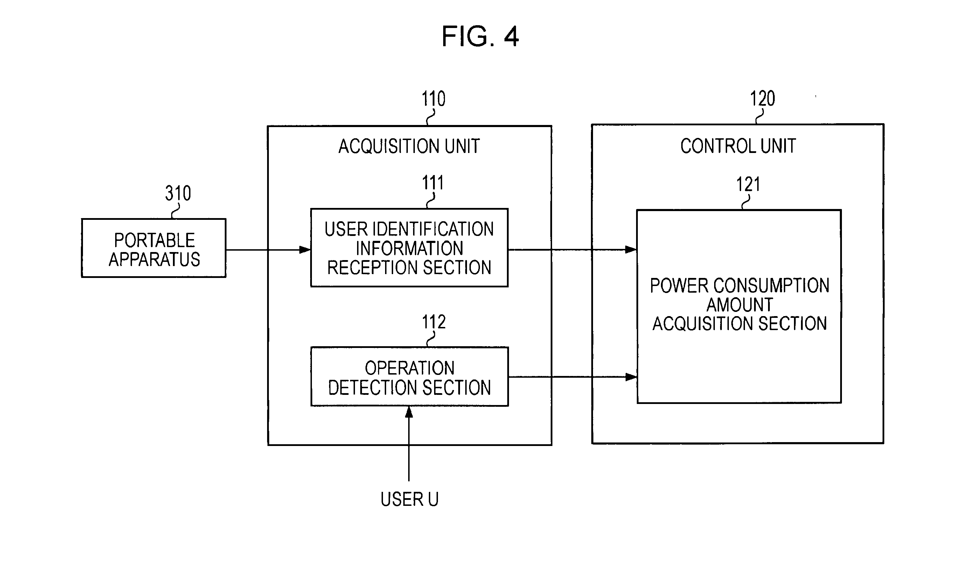

Fig. 3 is a diagram illustrating an acquisition example of the user identification information by the home appliance 100 according to the first embodiment of the present disclosure. Fig. 4 is a block diagram partially illustrating details of functional configurations in a case where the user identification information is acquired according to the acquisition example shown in Fig. 3.

As shown in Figs. 3 and 4, the acquisition unit 110 may include a user identification information reception section 111 which receives user identification information for identifying a user U from a portable apparatus 310 carried by the user U and thereby acquires the user identification information. In addition, the acquisition unit 110 may include an operation detection section 112 which detects a working operation (or a working start operation) to the home appliance 100 by the user U. In this case, when a working operation (working start operation) is detected by the operation detection section 112, the control unit 120 may include a power consumption amount acquisition section 121 which correlates a power consumption amount with user identification information received by the user identification information reception section 111.

The power consumption amount is uniquely defined for the home appliance 100 in some case, and is not uniquely defined for the home appliance 100 but is changed according to operation states of the home appliance 100 in other cases. In a case where the power consumption amount is uniquely defined for the home appliance 100, the power consumption amount acquisition section 121 may acquire a power consumption amount of the home appliance 100 when a working operation (or a working start operation) is detected by the operation detection section 112. In this case, if the power consumption amount is stored in the storage unit 130, the power consumption amount acquisition section 121 can acquire the power consumption amount based on the power consumption amount stored in the storage unit 130.

In a case where the power consumption amount is not uniquely defined for the home appliance 100, when a working operation (or a working state operation) is detected by the operation detection section 112, the power consumption amount acquisition section 121 may further check operation state, and acquire the power consumption amount corresponding to the operation state. In this case, if a correspondence relationship between the operation state and the power consumption amount is stored in the storage unit 130, the power consumption amount acquisition section 121 can obtain the power consumption amount based on the correspondence relationship. A power consumption amount may be a magnitude of power consumed per unit hour, and may be a value obtained by multiplying a magnitude of power consumed per unit hour by use time.

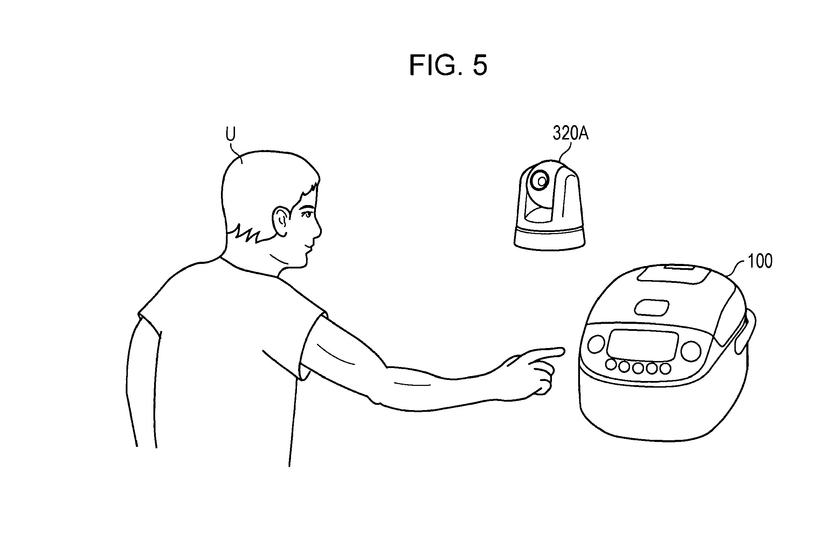

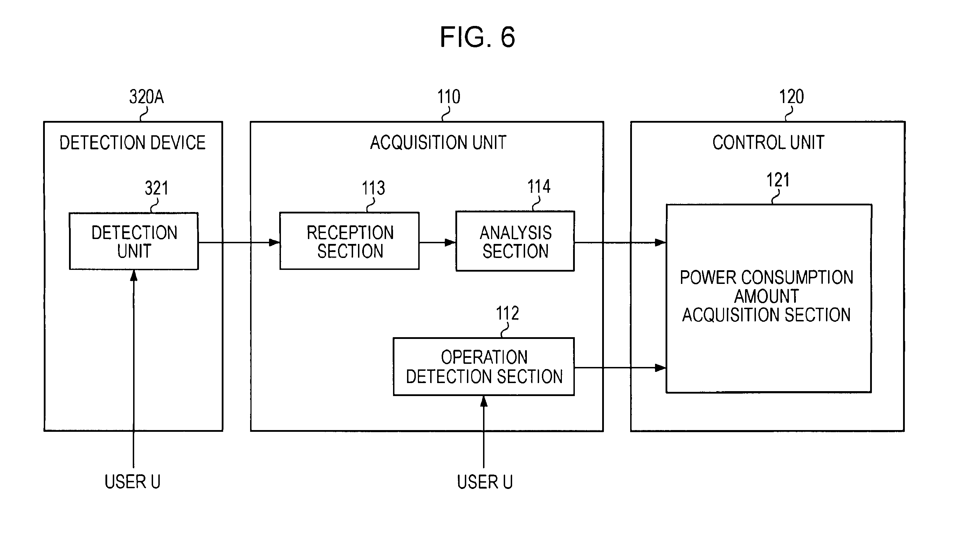

Fig. 5 is a diagram illustrating an acquisition example of user identification information by the home appliance 100 according to the first embodiment of the present disclosure. Fig. 6 is a block diagram partially illustrating details of functional configurations in a case where the user identification information is acquired according to the acquisition example shown in Fig. 5. According to this configuration, a user can reduce necessity of carrying the portable apparatus 310.

As shown in Figs. 5 and 6, a detection device 320A has a detection unit 321 which detects detection information. For example, as shown in Fig. 5, the detection device 320A includes an imaging device which captures an image of the face of the user U, and, in this case, detection information detected by the detection device 320A is an image of the face of the user U. The acquisition unit 110 may include a reception section 113 which receives detection information detected by the detection unit 321, an analysis section 114 which analyzes the detection information received by the reception section 113, and an operation detection section 112.

The analysis section 114 can acquire user identification information by analyzing the detection information received by the reception section 113. In this case, the control unit 120 may include the power consumption amount acquisition section 121 which correlates the power consumption amount with the user identification information acquired by the analysis section 114 when a working operation (or a working start operation) is detected by the operation detection section 112.

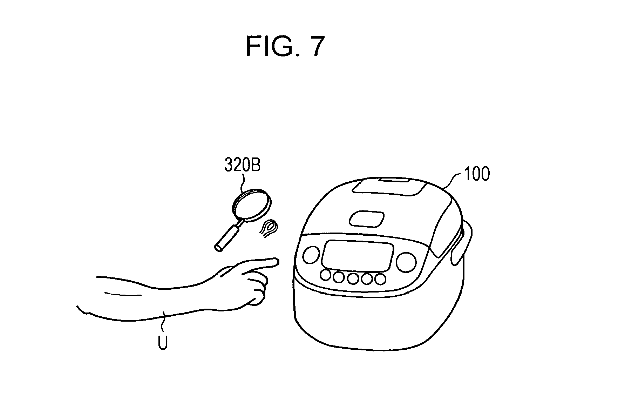

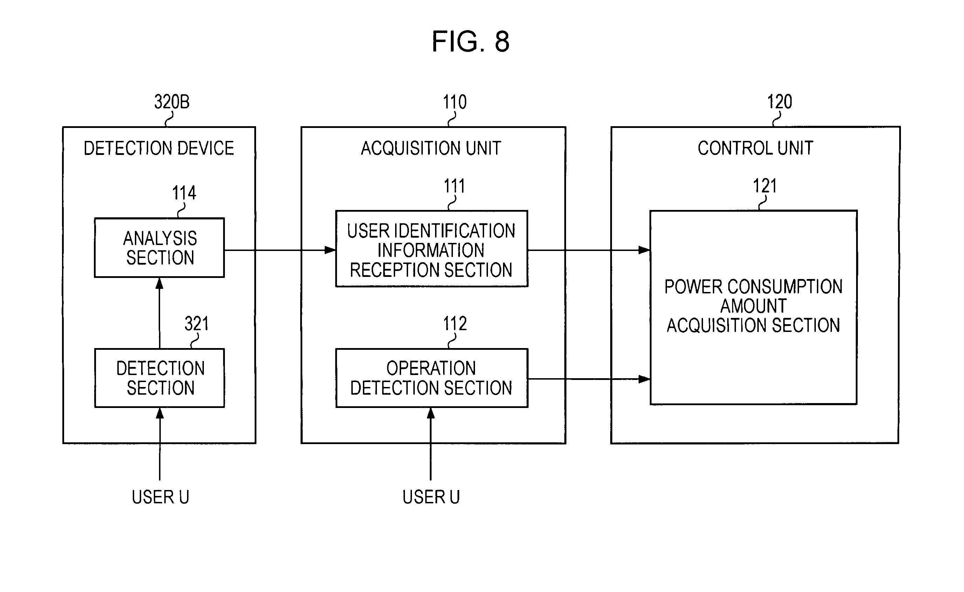

Fig. 7 is a diagram illustrating an acquisition example of user identification information by the home appliance 100 according to the first embodiment of the present disclosure. Fig. 8 is a block diagram partially illustrating details of functional configurations in a case where the user identification information is acquired according to the acquisition example shown in Fig. 7. According to this configuration, the user can reduce necessity of carrying the portable apparatus 310.

As shown in Figs. 7 and 8, a detection device 320B includes the detection unit 321 which detects detection information and the analysis section 114 which analyzes detection information. For example, as shown in Fig. 7, the detection device 320B includes a fingerprint authentication device or the like which authenticates fingerprint of the user U, and, in this case, detection information detected by the detection device 320B is fingerprint of the user U. The analysis section 114 can acquire user identification information by analyzing the detection information detected by the detection unit 321. The acquisition unit 110 may include the user identification information reception section 111 which receives user identification information acquired by the analysis section 114, and the operation detection section 112.

The control unit 120 may include the power consumption amount acquisition section 121 which correlates the power consumption amount with the user identification information acquired by the analysis section 114 when a working operation (or a working start operation) is detected by the operation detection section 112. In addition, the acquisition unit 110 may acquire user identification information through human body communication.

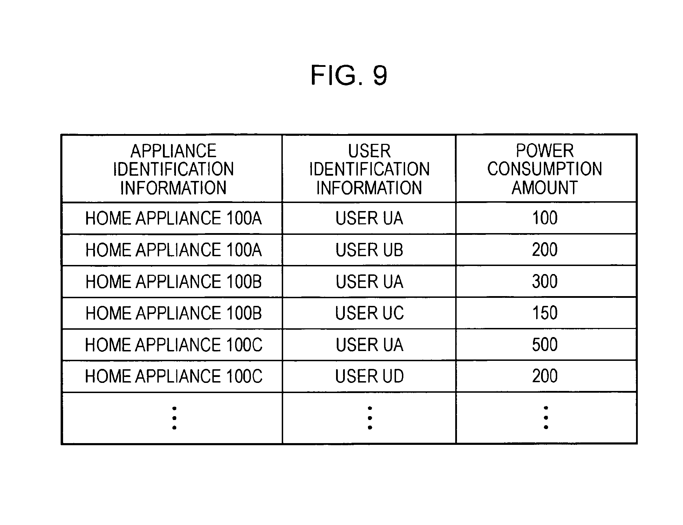

Fig. 9 is a diagram illustrating a configuration example of information managed by the server 200 according to the first embodiment of the present disclosure. As shown in Fig. 9, the correlation information is information where the user identification information is correlated with the power consumption amount. In addition, if appliance identification information for identifying the home appliance 100 is correlated with the correlation information and is transmitted from the home appliance 100, as shown in Fig. 9, the server 200 may further manage the appliance identification information along with the correlation information.

### 2.3. OPERATION OF INFORMATION PROCESSING SYSTEM

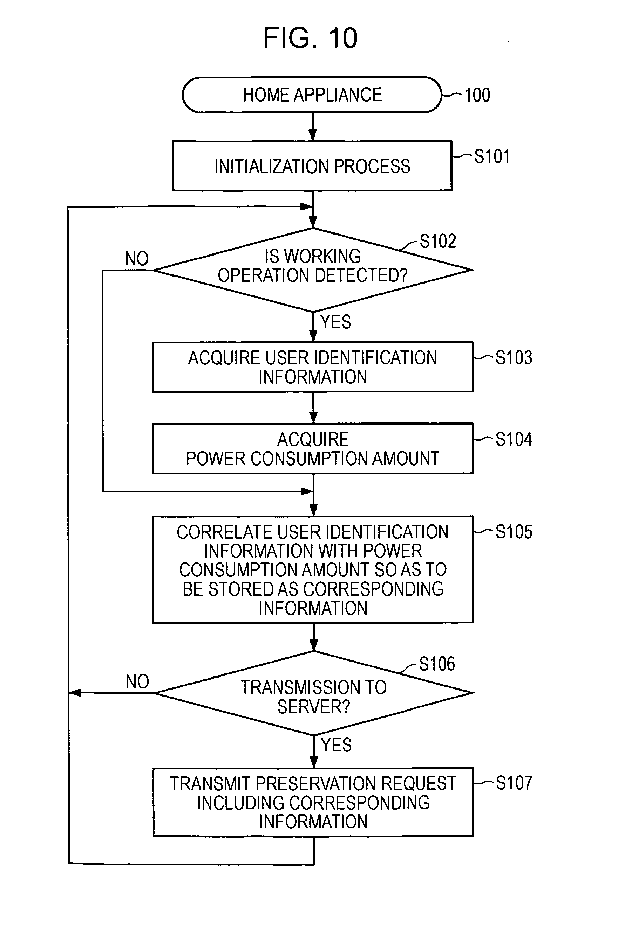

Next, an operation of the home appliance 100 according to the first embodiment of the present disclosure will be described with reference to Fig. 10. Fig. 10 is a flowchart illustrating an operation performed by the home appliance 100 according to the first embodiment of the present disclosure.

As shown in Fig. 10, the acquisition unit 110 of the home appliance 100 performs initialization (step S101), and if the operation detection section 112 does not detect a working operation ("No" in step S102), the flow proceeds to step S105. In the initialization process, user identification information "unidentified" is mainly set. Therefore, if a working operation is not detected by the operation detection section 112, and the flow proceeds to step S105, user identification information "unidentified" is predicted to be set. If the operation detection section 112 detects the working operation ("Yes" in step S102), the acquisition unit 110 acquires user identification information (step S103), the power consumption amount acquisition section 121 acquires a power consumption amount (step S104), and the flow proceeds to step S105.

The control unit 120 correlates the user identification information with the power consumption amount so as to be stored as correlation information in the storage unit 130. If the control unit 120 does not transmit the correlation information stored in the storage unit 130 to the server 200 ("No" in step S106), the flow returns step S102. In addition, the control unit 120 transmits the correlation information stored in the storage unit 130 to the server 200 ("Yes" in step S106), a preservation request including the correlation information is transmitted to the server 200 via the communication unit 140 (step S107), and the flow returns to step S102.

The control unit 120 may transmit the correlation information stored in the storage unit 130 to the server 200 for each predetermined time, and may transmit the correlation information stored in the storage unit 130 to the server 200 if correlation information stored in the storage unit 130 exceeds predetermined volume.

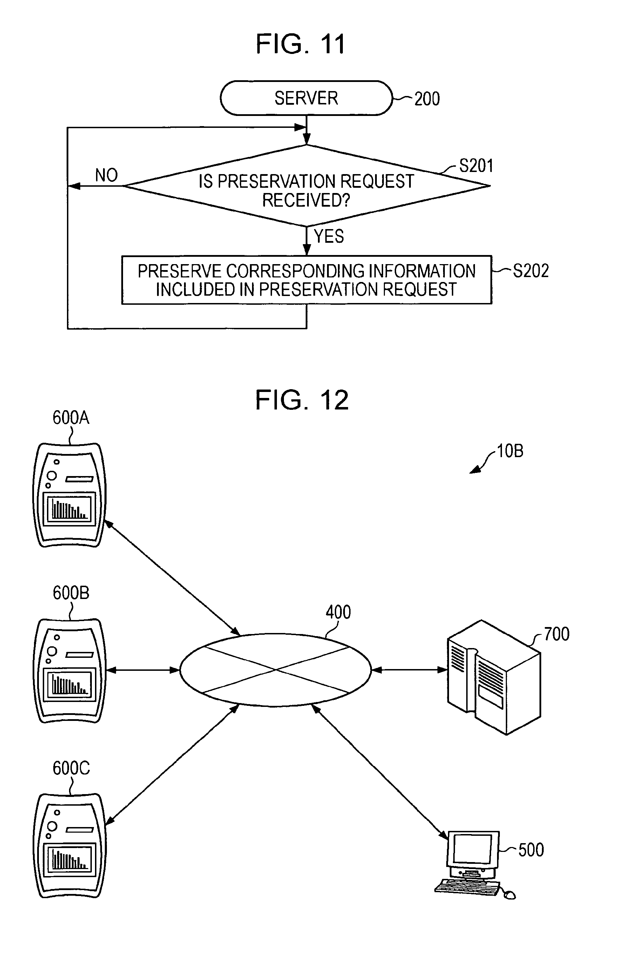

Next, an operation of the server 200 according to the first embodiment of the present disclosure will be described with reference to Fig. 11. Fig. 11 is a flowchart illustrating an operation of the server 200 according to the first embodiment of the present disclosure.

As shown in Fig. 11, if a preservation request is not received from the home appliance 100 by the communication unit 240 ("No" in step S201), the control unit 220 of the server 200 performs the process is step S201. In addition, if the preservation request is received from the home appliance 100 by the communication unit 240 ("Yes" in step S201), the control unit 220 preserves the correlation information included in the preservation request in the storage unit 230 (step S202), and the flow returns to step S201.

### 3. SECOND EMBODIMENT

As above, the first embodiment of the present disclosure has been described. Next, a second embodiment of the present disclosure will be described with reference to Figs. 12 to 17.

### 3.1. CONFIGURATION OF INFORMATION PROCESSING SYSTEM

Fig. 12 is a diagram illustrating a configuration of the information processing system according to the second embodiment of the present disclosure. As shown in Fig. 12, the information processing system 10B according to the second embodiment of the present disclosure includes data accumulation apparatuses 600A to 600C, a server 700 as an example of the information processing apparatus, and a terminal 500. The data accumulation apparatuses 600A to 600C, the server 700, and the terminal 500 can communicate with each other via a network 400. In addition, the number of each of data accumulation apparatuses 600A to 600C, the server 700, and the terminal 500 is not particularly limited.

The server 700 acquires user identification information for identifying a user and generates correlation information by correlating the acquired user identification information with an environmental impact which is an impact exerted on the environment by the user. The server 700 stores the generated correlation information. In the second embodiment of the present disclosure, an environmental impact which is obtained by analyzing history information accumulated in the data accumulation apparatus 600 is used.

The terminal 500 receives the correlation information stored in the server 700, and can represent the correlation information to a user by displaying the received correlation information.

### 3.2. FUNCTION OF INFORMATION PROCESSING SYSTEM

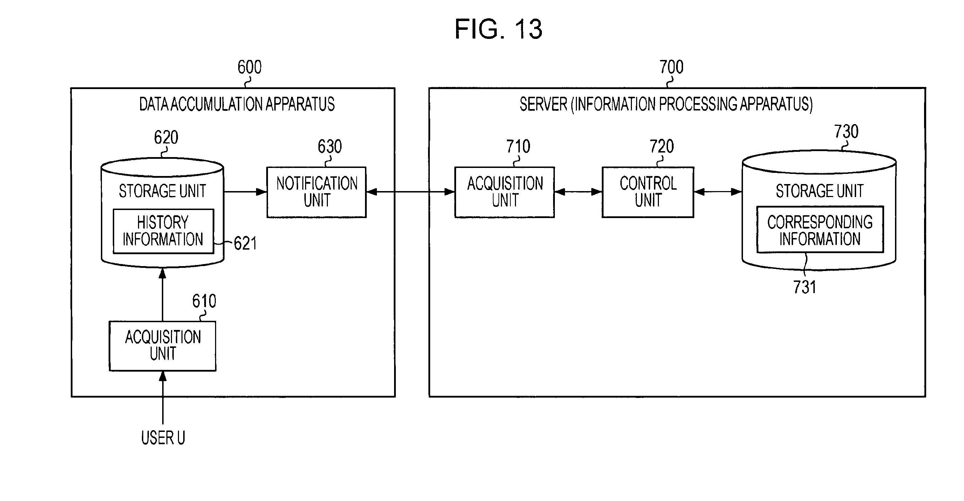

Fig. 13 a block diagram illustrating functional configurations of the data accumulation apparatus 600 and the server 700 according to the second embodiment of the present disclosure. As shown in Fig. 13, the data accumulation apparatus 600 includes an acquisition unit 610, a storage unit 620, and a notification unit 630. In addition, as shown in Fig. 13, the server 700 includes an acquisition unit 710, a control unit 720, and a storage unit 730.

The acquisition unit 610 acquires history information regarding actions of the user U. For example, in a case where the user U carries the data accumulation apparatus 600, and the data accumulation apparatus 600 has a positioning function (for example, a function of performing GPS positioning), history of positional information of the data accumulation apparatus 600 (movement history of the user U) may be acquired as history information regarding the actions of the user U.

In addition, for example, in a case where the user U carries the data accumulation apparatus 600, and the data accumulation apparatus 600 has an electronic money function, purchase history by the data accumulation apparatus 600 may be acquired as history information regarding the actions of the user U.

The storage unit 620 has a function of storing the history information acquired by the acquisition unit 610. The storage unit 620 is constituted by, for example, a storage device. The notification unit 630 is constituted by, for example, a communication device, and may function as a transmission unit transmitting the history information stored in the storage unit 620 to the server 700, and a reception unit. The notification unit 630 may transmit the history information 621 stored in the storage unit 620 to the server 700 for each predetermined time, and may transmit the history information 621 stored in the storage unit 620 to the server 700 if the history information 621 stored in the storage unit 620 exceeds predetermined volume.

The acquisition unit 710 acquires history information regarding actions of the user U and user identification information. The control unit 720 analyzes the history information acquired by the acquisition unit 710, and correlates an environmental impact acquired through the analysis with the user identification information acquired by the acquisition unit 710.

If the acquisition unit 710 acquires movement history of the user U as the history information, the control unit 720 may acquire a transportation of the user U by analyzing the movement history, and correlate an environmental impact corresponding to the acquired transportation and the user identification information. In addition, if the acquisition unit 710 acquires purchase history of the user U as the history information, the control unit 720 may acquire an environmental impact by analyzing the purchase history and correlate the acquired environmental impact with the user identification information.

The control unit 720 may add a combination of the environmental impact and the user identification information to the correlation information 731. The storage unit 730 stores a variety of information used by the control unit 720. The storage unit 730 stores, for example, the correlation information 731 in response to a control by the control unit 720. The storage unit 730 is constituted by, for example, a storage device.

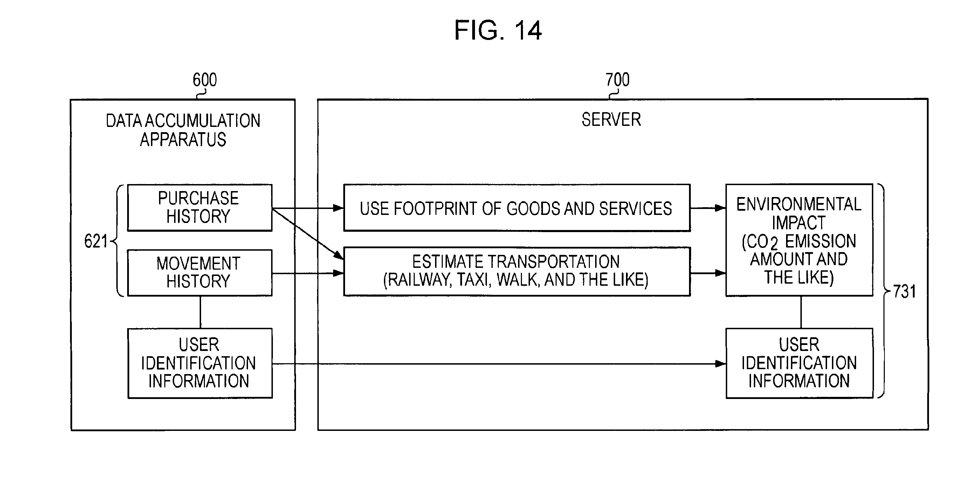

Fig. 14 is a diagram illustrating a detailed example of the process performed by the information processing system 10B according to the second embodiment of the present disclosure. As shown in Fig. 14, the data accumulation apparatus 600 accumulates purchase history and movement history as the history information 621. The purchase history and the movement history may be correlated with user identification information.

The control unit 720 of the server 700 may apply carbon footprint of goods and services to, for example, the purchase history, thereby calculating a CO₂ emission amount emitted at each procedure of the life cycle of the purchased goods and services, as an environmental impact. In addition, the control unit 720 may estimate transportations (railway, taxi, walk, and the like) used by the user U based on, for example, the movement history (positional information history, speed information history, and the like), and calculate a CO₂ emission amount by the estimated transportations as an environmental impact.

Further, the control unit 720 may estimate transportations (railway, taxi, walk, and the like) used by the user U based on, for example, both the purchase history (purchased tickets, purchased airline tickets, and the like) and the movement history (positional information history, speed information history, and the like), and calculate a CO₂ emission amount by the estimated transportations as an environmental impact. The environmental impact calculated in this way may be treated as being emitted by the user U having the data accumulation apparatus 600.

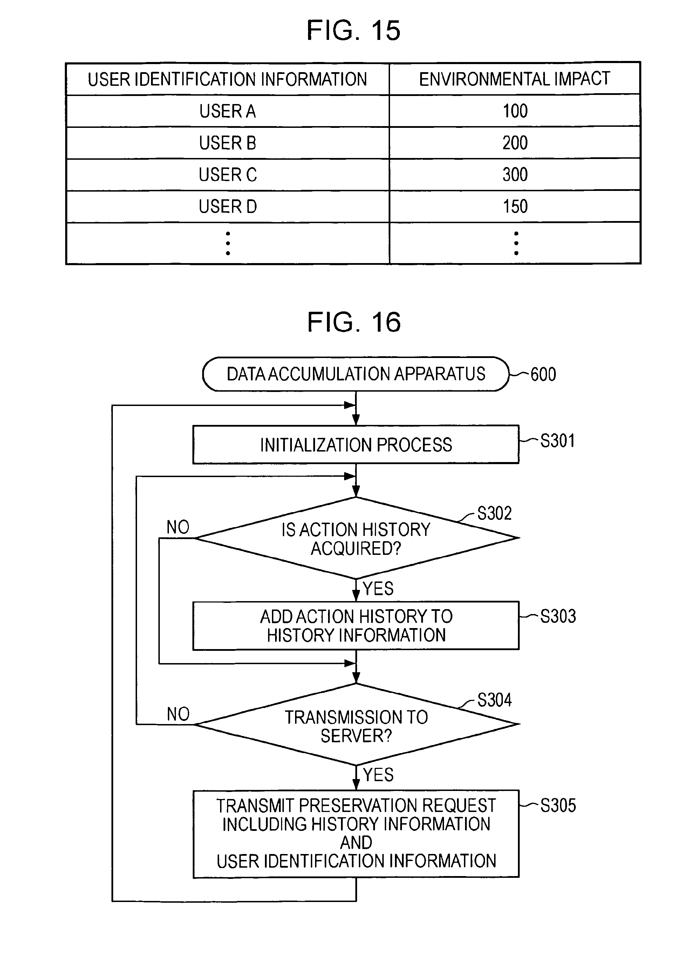

Fig. 15 is a diagram illustrating a configuration example of the information managed by the server 700 according to the second embodiment of the present disclosure. As shown in Fig. 15, the correlation information is information where the user identification information is correlated with the environmental impact.

### 3.3. OPERATION OF INFORMATION PROCESSING SYSTEM

Next, referring to Fig. 16, an operation of the data accumulation apparatus 600 according to the second embodiment of the present disclosure will be described. Fig. 16 is a flowchart illustrating an operation performed by the data accumulation apparatus 600 according to the second embodiment of the present disclosure.

As shown in Fig. 16, the acquisition unit 610 of the data accumulation apparatus 600 performs initialization (step S301), and in the initialization process, user identification information "unidentified" is mainly set. Therefore, if user identification information is not acquired by the acquisition unit 610, and the flow proceeds to step S305, user identification information "unidentified" is predicted to be set. If the acquisition unit 610 does not acquire movement history ("No" in step S302), the flow proceeds to step S304. If the movement history is acquired ("Yes" in step S302), the acquisition unit 610 adds the movement history to the history information 621 (step S303), the flow proceeds to step S304.

If the notification unit 630 does not transmit the history information 621 stored in the storage unit 620 to the server 700 ("No" in step S304), the flow returns to step S302. In addition, if the notification unit 630 transmits the history information 621 stored in the storage unit 620 to the server 700 ("Yes" in step S304), a preservation request including the history information 621 and the user identification information is transmitted to the server 700 via the notification unit 630 (step S305), and the flow returns to step S301.

The notification unit 630 may transmit the history information 621 stored in the storage unit 620 to the server 700 for each predetermined time, and may transmit the history information 621 stored in the storage unit 620 to the server 700 if the history information 621 stored in the storage unit 620 exceeds a predetermined volume.

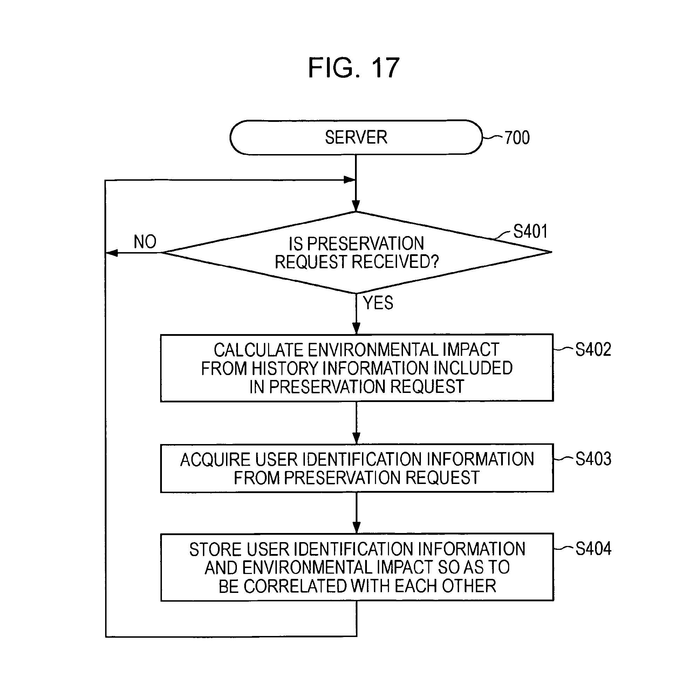

Next, an operation of the server 700 according to the second embodiment of the present disclosure will be described with reference to Fig. 17. Fig. 17 is a flowchart illustrating an operation performed by the server 700 according to the second embodiment of the present disclosure.

As shown in Fig. 17, if a preservation request is not received from the data accumulation apparatus 600 by the acquisition unit 710 ("No" in step S401), the control unit 720 of the server 700 performs the process in step S401. In addition, if the preservation request is received from the data accumulation apparatus 600 by the acquisition unit 710 ("Yes" in step S401), the control unit 720 calculates an environmental impact from the history information included in the preservation request (step S402). Next, the control unit 720 acquires user identification information from the preservation request (step S403), generates correlation information by correlating the user identification information with the environmental impact, and stores the generated correlation information in the storage unit 730 (step S402), and the flow returns to step S401.

### 4. HARDWARE CONFIGURATION OF INFORMATION PROCESSING APPARATUS

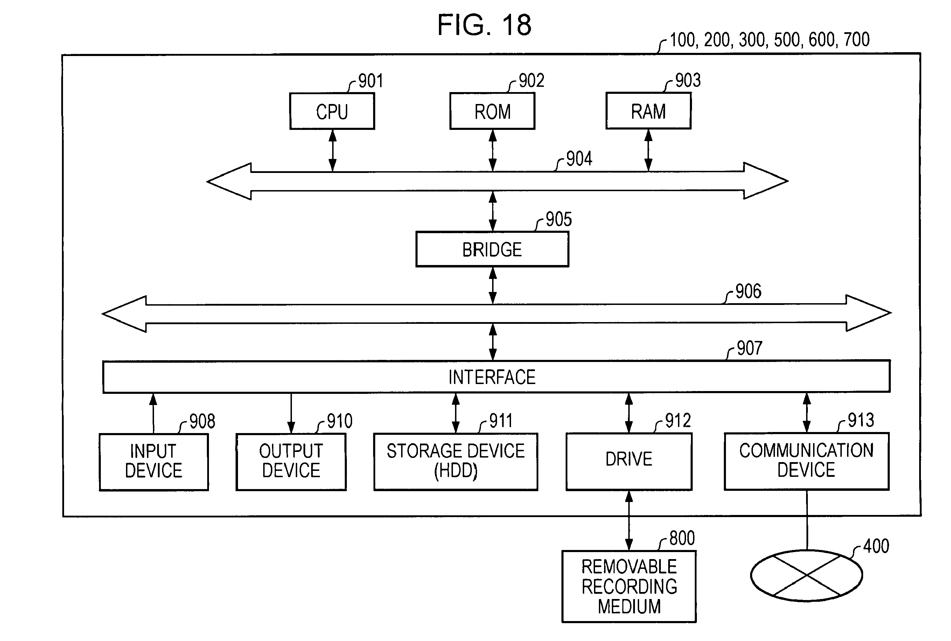

Next, a hardware configuration of the information processing apparatus according to each embodiment of the present disclosure will be described with reference to Fig. 18. Fig. 18 is a block diagram illustrating a hardware configuration of the information processing apparatus according to each embodiment of the present disclosure.

In the example, the information processing apparatus mainly includes a CPU 901, a ROM 902, a RAM 903, a host bus 904, a bridge 905, an external bus 906, an interface 907, an input device 908, an output device 910, a storage device 911, a drive 912, and a communication device 913.

The CPU 901 functions as an operation processing device and a control device, and controls all or a part of operations of the information processing apparatus according to various programs recorded in the ROM 902, the RAM 903, the storage device 911, or a removable recording medium 800. The ROM 902 stores programs, operation parameters, or the like used by the CPU 901. The RAM 903 temporarily stores programs used in execution of the CPU 901, parameters which are appropriately varied in execution thereof. They are connected to each other via the host bus 904 formed by an internal bus such as a CPU bus.

The host bus 904 is connected to the external bus 906 such as a PCI (Peripheral Component Interconnect/Interface) bus via the bridge 905.

The input device 908 is an operation section which is operated by a user, such as, for example, a mouse, a keyboard, a touch panel, a button, a switch, and a lever. In addition, the input device 908 may be a remote control section using, for example, infrared rays or other electric waves, and may be an external connection device such as a portable telephone or a PDA supporting an operation of the information processing apparatus. Further, the input device 908 is constituted by an input control circuit and the like which generate an input signal based on, for example, information input by a user using the operation section, and output the input signal to the CPU 901. A user of the information processing apparatus operates the input device 908, thereby inputting a variety of data to the information processing apparatus or instructing processing actions.

The output device 910 includes devices which can notify a user of acquired information visually or audibly, such as display devices such as, for example, a CRT display device, a liquid crystal display device, a plasma display device, an E L display device, and a lamp, an audio output device such as a speaker and a headset, a printer device, a portable telephone, and a facsimile. The output device 910 outputs results obtained by, for example, a variety of processes performed by the information processing apparatus. Specifically, the display device displays results obtained by a variety of processes performed by the information processing apparatus, in a form of text or information. On the other hand, the audio output device converts an audio signal including reproduced voice data or sound data into an analog signal for output.

The storage device 911 is a data storage device which is configured as an example of the storage unit of the information processing apparatus, and, is constituted by, for example, a magnetic storage device such as an HDD (Hard Disk Drive), a semiconductor device, an optical storage device, or a magneto-optical storage device. The storage device 911 stores programs executed by the CPU 901, a variety of data, and sound signal data or information signal data acquired from an external device.

The drive 912 is a reader/writer for recording media, and is embedded in or is externally attached to the information processing apparatus. The drive 912 reads information recorded on a magnetic disk, an optical disc, a magneto-optical disc, or the removable recording medium 800 such as a semiconductor memory, which is installed therein, and outputs the read information to the RAM 903. In addition, the drive 912 can write recording the magnetic disk, the optical disc, the magneto-optical disc, or the removable recording medium 800 such as a semiconductor memory, which is installed therein. The removable recording medium 800 is for example, a DVD medium, an HD-DVD medium, a Blu-ray medium, a Compact Flash (registered trademark) (CF), a memory stick, an SD (Secure Digital) memory card, or the like. In addition, the removable recording medium 800 may be, for example, an IC (Integrated Circuit) card or an electronic apparatus having a noncontact IC chip mounted therein.

The communication device 913 is a communication interface which includes communication devices and the like for connection to the network 400. The communication device 913 may be, for example, a communication card or the like for a wired or wireless LAN (Local Area Network), Bluetooth, or a WUSB (Wireless USB), a router for optical communication, a router for ADSL (Asymmetric Digital Subscriber Line), a modem for various kinds of communication, or the like. This communication device 913 can transmit and receive a sound signal to and from, for example, the Internet, or other communication devices. In addition, the network 400 connected to the communication device 913 is formed by a network or the like connected in a wired or wireless manner, and may be, for example, the Internet, a home LAN, infrared communication, radio wave communication, satellite communication, or the like.

As above, an example of the hardware configuration capable of realizing the function of the information processing apparatus according to the embodiments of the present disclosure has been described. Each of the above-described constituent elements may be configured using general purpose members, or may be configured by hardware specialized to the function of each constituent element. Therefore, a hardware configuration to be used may be appropriately modified according to the technical level at the time of implementing the embodiment.

### 5. CONCLUSION

As described above, according to the embodiments of the present disclosure, the information processing apparatus acquires user identification information for identifying a user, and generates correlation information by correlating the acquired user identification information with an environmental impact which is an impact exerted on the environment by the user. In addition, the information processing apparatus stores the generated correlation information. Therefore, it is possible to grasp an environmental impact for each user.

According to the embodiments of the present disclosure, it is possible to measure and manage an environmental impact in, for example, personal base. Particularly, according to the first embodiment of the present disclosure, user identification information for identifying a user is acquired in tandem with an operation of the home appliance 100 by the user, and thus a burden on the user is not increased. In addition, the embodiments of the present disclosure can be introduced without recognition of an operation for measuring an environmental impact.

In addition, according to the embodiments of the present disclosure, it is possible to improve user's awareness of environments. Therefore, the embodiments of the present disclosure may be used in an application of game and the like aiming at reduction in an environmental impact. In addition, the embodiments of the present disclosure may be applied to a service which does not only aim at environmental impact reduction between users of game or the like but also proposes actions for personally reducing an environmental impact.

As such, although the preferred embodiment of the present disclosure has been described with reference to the accompanying drawings, the present disclosure is not limited to the embodiment. It is obvious that a person skilled in the art can conceive of a variety of modifications or alterations within the scope of the technical spirit disclosed in the claims, and it is understood that they naturally belong to the technical scope of the present disclosure.

For example, the respective steps in the process executed by the information processing apparatus of the present specification is not necessarily processed in time series according to the order described in the flowchart. For example, the respective steps in the process executed by the information processing apparatus may be processed in an order different from the order described in the flowchart, or may be processed in parallel.

In addition, the hardware such as the CPU 901, the ROM 902, and the RAM 903 embedded in the information processing apparatus can be created as a computer program for realizing functions equivalent to the respective constituent elements of the information processing apparatus. In addition, a recording medium storing the computer program thereon is provided.

In addition, the present disclosure may have the following configurations.
(1) An information processing apparatus includes an acquisition unit that acquires personal identification information for identifying a person; a control unit that generates correlation information by correlating the personal identification information acquired by the acquisition unit with an environmental impact which is an impact exerted on the environment by the person; and a storage unit that stores the correlation information generated by the control unit.
(2) The information processing apparatus set forth in (1), wherein the control unit correlates a power consumption amount which is a power amount consumed by the use of the information processing apparatus as the environmental impact with the personal identification information.
(3) The information processing apparatus set forth in (1) or (2), wherein the acquisition unit detects a working operation of the information processing apparatus performed by the person, and wherein the control unit correlates the power consumption amount with the personal identification information if the working operation is detected by the acquisition unit.
(4) The information processing apparatus set forth in any one of (1) to (3), wherein the acquisition unit acquires the personal identification information by receiving the personal identification information transmitted from a portable terminal of the person.
(5) The information processing apparatus set forth in any one of (1) to (3), wherein the acquisition unit acquires detection information which is detected by a detection device, from the detection device, and acquires the personal identification information by analyzing the detection information.
(6) The information processing apparatus set forth in any one of (1) to (3), wherein the acquisition unit acquires the personal identification information by receiving the personal identification information which has been acquired by analyzing detection information detected by a detection device.
(7) The information processing apparatus set forth in (1), wherein the acquisition unit further acquires history information regarding actions of the person, and wherein the control unit correlates the environmental impact acquired by analyzing the history information with the personal identification information.
(8) The information processing apparatus set forth in (7), wherein the acquisition unit acquires movement history of the person as the history information, and wherein the control unit acquires a transportation of the person by analyzing the movement history and correlates the environmental impact corresponding to the transportation with the personal identification information.
(9) The information processing apparatus set forth in (7), wherein the acquisition unit acquires purchase history of the person as the history information, and wherein the control unit acquires the environmental impact by analyzing the purchase history, and correlates the acquired environmental impact with the personal identification information.
(10) An information processing method includes acquiring personal identification information for identifying a person; generating correlation information by correlating the acquired personal identification information with an environmental impact which is an impact exerted on the environment by the person; and storing the generated correlation information.
(11) A program enabling a computer to function as an information processing apparatus including an acquisition unit that acquires personal identification information for identifying a person; a control unit that generates correlation information by correlating the personal identification information acquired by the acquisition unit with an environmental impact which is an impact exerted on the environment by the person; and a storage unit that stores the correlation information generated by the control unit.
(12) An information processing system has an information processing apparatus; and a server, wherein the image processing apparatus includes an acquisition unit that acquires personal identification information for identifying a person; a control unit that generates correlation information by correlating the personal identification information acquired by the acquisition unit with an environmental impact which is an impact exerted on the environment by the person; a storage unit that stores the correlation information generated by the control unit; and a transmission unit that transmits the correlation information stored in the storage unit, and wherein the server includes a reception unit that receives the correlation information from the information processing apparatus; and a storage unit that stores the correlation information received by the reception unit.
(13) An information processing system has a data accumulation apparatus; and a server, wherein the data accumulation apparatus includes a storage unit that stores personal identification information for identifying a person and history information regarding actions of the person; and a transmission unit that transmits the personal identification information and the history information stored in the storage unit, and wherein the server includes an acquisition unit that acquires the personal identification information and the history information from the data accumulation apparatus; a control unit that generates correlation information by correlating the personal identification information acquired by the acquisition unit with an environmental impact obtained by analyzing the history information acquired by the acquisition unit; and a storage unit that stores the correlation information generated by the control unit.

The present disclosure contains subject matter related to that disclosed in Japanese Priority Patent Application JP 2011-078074 filed in the Japan Patent Office on March 31, 2011, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus comprising:
an acquisition unit that acquires personal identification information for identifying a person;
a control unit that generates correlation information by correlating the personal identification information acquired by the acquisition unit with an environmental impact which is an impact exerted on the environment by the person; and
a storage unit that stores the correlation information generated by the control unit.

2. The information processing apparatus according to claim 1, wherein the control unit correlates a power consumption amount which is a power amount consumed by the use of the information processing apparatus as the environmental impact with the personal identification information.

3. The information processing apparatus according to claim 2, wherein the acquisition unit detects a working operation of the information processing apparatus performed by the person, and
wherein the control unit correlates the power consumption amount with the personal identification information if the working operation is detected by the acquisition unit.

4. The information processing apparatus according to any of the preceding claims, wherein the acquisition unit acquires the personal identification information by receiving the personal identification information transmitted from a portable terminal of the person.

5. The information processing apparatus according to any
of the preceding claims, wherein the acquisition unit acquires detection information which is detected by a detection device, from the detection device, and acquires the personal identification information by analyzing the detection information.

6. The information processing apparatus according to any of the preceding claims, wherein the acquisition unit acquires the personal identification information by receiving the personal identification information which has been acquired by analyzing detection information detected by a detection device.

7. The information processing apparatus according to any of the preceding claims, wherein the acquisition unit further acquires history information regarding actions of the person, and
wherein the control unit correlates the environmental impact acquired by analyzing the history information with the personal identification information.

8. The information processing apparatus according to claim 7, wherein the acquisition unit acquires movement history of the person as the history information, and
wherein the control unit acquires a transportation of the person by analyzing the movement history and correlates the environmental impact corresponding to the transportation with the personal identification information.

9. The information processing apparatus according to claim 7 or 8, wherein the acquisition unit acquires purchase history of the person as the history information, and
wherein the control unit acquires the environmental impact by analyzing the purchase history, and correlates the acquired environmental impact with the personal identification information.

10. An information processing method comprising:
acquiring personal identification information for identifying a person;
generating correlation information by correlating the acquired personal identification information with an environmental impact which is an impact exerted on the environment by the person; and
storing the generated correlation information.

11. A program enabling a computer to function as an information processing apparatus comprising:
an acquisition unit that acquires personal identification information for identifying a person;
a control unit that generates correlation information by correlating the personal identification information acquired by the acquisition unit with an environmental impact which is an impact exerted on the environment by the person; and
a storage unit that stores the correlation information generated by the control unit.

12. An information processing system comprising:
an information processing apparatus; and
a server,
wherein the image processing apparatus includes
an acquisition unit that acquires personal identification information for identifying a person;
a control unit that generates correlation information by correlating the personal identification information acquired by the acquisition unit with an environmental impact which is an impact exerted on the environment by the person;
a storage unit that stores the correlation information generated by the control unit; and
a transmission unit that transmits the correlation information stored in the storage unit, and
wherein the server includes
a reception unit that receives the correlation information from the information processing apparatus; and
a storage unit that stores the correlation information received by the reception unit.

13. An information processing system comprising:
a data accumulation apparatus; and
a server,
wherein the data accumulation apparatus includes
a storage unit that stores personal identification information for identifying a person and history information regarding actions of the person; and
a transmission unit that transmits the personal identification information and the history information stored in the storage unit, and
wherein the server includes
an acquisition unit that acquires the personal identification information and the history information from the data accumulation apparatus;
a control unit that generates correlation information by correlating the personal identification information acquired by the acquisition unit with an environmental impact obtained by analyzing the history information acquired by the acquisition unit; and
a storage unit that stores the correlation information generated by the control unit.
